# EUROPÄISCHE PATENTSCHRIFT

(11) **EP 1 109 690 B1**
(45) Veröffentlichungstag und Bekanntmachung des Hinweises auf die Patenterteilung: **08.05.2002**
(21) Anmeldenummer: 99968228.9
(22) Anmeldetag: 01.09.1999
(51) Int. Cl.: B60J 7/06

(54) **SCHIEBEBÜGELVERDECK**
TARPAULIN BOW COVER SYSTEM
BACHE A ARCEAUX COULISSANTS

(30) Priorität: 01.09.1998 DE 19839820
(43) Veröffentlichungstag der Anmeldung: 27.06.2001
(73) Patentinhaber: Edscha LKW-Schiebeverdecke GmbH, 42855 Remscheid (DE)
(72) Erfinder: FLIEGE, Dieter, D-42855 Remscheid (DE); REMMEL, Roger, D-42879 Remscheid (DE); DRASCH, Josef, D-94577 Winzer (DE)
(74) Vertreter: Sparing, Rolf Klaus
(86) Internationale Anmeldenummer: DE9902823
(87) Internationale Veröffentlichungsnummer: WO0012337

(56) Entgegenhaltungen:
- EP-A- 0 273 740
- CA-A- 2 197 750
- GB-A- 2 248 047

## Beschreibung

Die Erfindung betrifft ein Schiebebügelverdeck nach dem Oberbegriff des Anspruchs 1.

Das gattungsbildende Dokument EP-A-0 273 740 beschreibt ein Schiebebügelverdeck, bei dem ein Verdeck über eine Mehrzahl von in Längsrichtung einer Ladepritsche verfahrbaren Schiebebügeln abgestützt ist.

US-A-4,711,484 beschreibt ein für LKW und Anhänger geeignete Bauart eines Schiebebügelverdecks das sich durch eine Vielzahl U-förmiger Schiebebügel auszeichnet, welche über Rollenwagen an seitlich an der Ladepritsche angeordneten Lauf- und Führungsschienen längsverfahrbar abgestützt sind und eine einen Laderaum oberhalb der Ladepritsche überdeckende Plane abstützen. Die Plane ist dabei mit den Schiebebügeln verbunden und soll sich beim Öffnen des Verdeckes bzw. beim Zusammenschieben der Schiebebügel automatisch falten. In Ermangelung hierfür geeigneter Vorrichtungen kann bei einem Schiebebügelverdeck dieser Bauart eine geregelte Faltung der Plane zwischen den zusammengeschobenen Schiebebügeln jedenfalls dann nicht erreicht werden, wenn die Anzahl der eingesetzten Schiebebügel auf eine Stückzahl reduziert wird, welche bei geöffnetem Schiebebügelverdecke die Freigabe von wenigstens drei Vierteln der Ladepritschenlänge gewährleistet.

Es ist die Aufgabe der Erfindung, ein Schiebebügelverdeck nach dem Oberbegriff des Anspruch 1 zu schaffen, das bei hinreichender Freigabe der Ladepritsche bei geöffnetem Verdeck eine geregelte Faltung der Plane zwischen den zusammengeschobenen Schiebebügeln erreicht.

Diese Aufgabe wird bei dem eingangs genannten Schiebebügelverdeck mit den kennzeichnenden Merkmalen des Anspruch 1 gelöst.

Hierdurch wird vorteilhaft ein Schiebebügelverdeck geschaffen, das eine geregelte Faltung der Plane zwischen den zusammengeschobenen Schiebebügeln gewährleistet, auch wenn die Anzahl der eingesetzten Schiebebügel auf eine Stückzahl, z.B. vier oder sechs, reduziert ist, welche bei geöffnetem Schiebebügelverdeck wenigstens drei Viertel der Ladepritschenlänge freigibt. Femer ermöglicht das erfindunggemäße Schiebebügelverdeck eine Einhandbedienung oder jedenfalls eine Einmannbedienung.

Der erfindungsgemäße Einsatz von in einer ersten Betriebsstellung unter einem spitzen Winkel zu den Schiebebügeln angestellten und in einer zweiten Betriebslage parallel zu den Schiebebügeln ausgerichteten, wie Hilfsspriegel ausgerichtete Hilfsbügel ermöglicht einerseits einen verhältnismäßig großen Abstand zwischen den Schiebebügeln und andererseits beim Zusammenschieben der Schiebebügel ein Anheben der Plane zwischen einander benachbarten Schiebebiigeln, etwa im Sinne einer nach oben gerichteten Faltung, so daß durch den Einsatz von Hilfsbügeln zum einen eine Verringerung der Anzahl von Schiebebügeln und zum anderen jedoch gleichzeitig eine geregelte Faltung der Plane erreicht wird.

Im Interesse einer möglichst problemlosen Faltung der Plane bei verhältnismäßig großen Abständen zwischen benachbarten Schiebebügeln ist zweckmäßigerweise weiter vorgesehen, daß jeder Schiebebügel beidseitig mit je einem Hilfsbügel ausgestattet ist.

In besonderer Ausgestaltung ist zur Erzwingung zunächst einer nach oben gerichteten Faltung des oberen Bereiches der Plane zwischen den Schiebebügeln vorgesehen, daß die beiden Hilfsbügel mit der Plane verbunden sind. Ferner können die beiden Hilfsbügel mittels umsetzbarer Lager höhenverstellbar an den beiden Schenkeln des Schiebebügels gelagert sein.

Die U-förmigen Schiebebügel und die U-förmigen Hilfsbügel sind vorzugsweise jeweils mehrteilig ausgebildet und beispielsweise aus wenigstens drei geraden und zwei winkelförmigen Profilmaterialzuschnitten zusammengesetzt. Hierdurch können die Schiebebügel und die Hilfsbügel zum teil aus denselben Zuschnitten zusammengesetzt werden, wodurch Lagerhaltung und Teilevielfalt beschränkt bleiben.

Zur gleichzeitigen Erzwingung einer gleichfalls geregelten Faltung der Seitenwandbereiche der Plane in den Bereichen zwischen benachbarten Schiebebügeln beim Öffnen des Schiebebügelverdecks ist vorzugsweise vorgesehen, daß die Plane an ihren beiden unteren Längsrändem über halbsteife Elemente mit den Schiebebügeln bzw. den diese tragenden Rollenwagen verbunden ist. Hierzu kann eine Einrichtung zur Erzwingung einer geregelten Faltung der Seitenwandbereiche der Plane derart ausgebildet sein, daß einander benachbarte Schiebebügel vermittels an den ihnen zugeordneten Rollenwagen befestigter Drahtseilbügel untereinander verbunden sind, und daß die Plane unterendig jeweils über einen Teil des maximal möglichen Abstandes zwischen zwei benachbarten Schiebebügeln hin mit einem Hohlsaum versehen ist und daß ferner die die benachbarten Schiebebügel untereinander verbindenden Drahtseilbügel die im Bereich der unteren Längsränder der Plane ausgebildeten Hohlsaumabschnitte durchgreifen.

Die Plane im Bereich der Befestigung der Drahtseilbügel an den Rollenwagen bzw. Schiebebügeln ist vorzugsweise jeweils mit einem hohlsaumfreien Längenbereich ausgestattet, dessen Länge zur Erzwingung einer bezüglich der Ladepritsche nach außen gerichteten Faltung hinreichend ist, wobei den Drahtseilbügeln ferner Abweiselemente zur Erzwingung einer bogenförmigen Auslenkung zugeordnet sind.

Zur Erzielung einer gewissen Abdichtung des Planenaufbaues bzw. Schiebeverdeckes nach unten ist zweckmäßig vorgesehen, daß die Drahtseilbügel jeweils an deren Unterseite an den Rollenwagen befestigt sind, insbesondere derart, daß sich eine Art Labyrinthdichtung zwischen Ladepritschenlängsseite und Plane ergibt.

Zur Sicherstellung der für eine Erreichung einer Einmannbedienung unbedingt wünschenswerten absoluten Steifigkeit wenigstens des beweglichen Endbügels ist bei vorteilhafter weiterer Gestaltung des Schiebebügelverdecks ferner vorgesehen, daß die beiden Endbügel des Verdeckes jeweils aus zwei untereinander über eine Vielzahl von Abstandsblechen verbundenen U-förmigen Bügeln aus einem Rohrmaterial bestehen, wobei die die Rohrmaterialbügel untereinander verbindenden Blechmaterialabschnitte eine trapezförmige Profilquerschnittsform aufweisen, deren Profiltiefe höchstens gleich groß, vorzugsweise geringer ist als der Durchmesser der Rohrmaterialbügel und wobei die Abstandsbleche ferner mittels Schweißung mit den Rohrmaterialbügeln verbunden sind.

Der bewegliche Endbügel des Schiebebügelverdecks ist vorteilhafterweise vermittels wenigstens eines Schwenkriegels in seiner dem geschlossenen Verdeck entsprechenden Position der Ladepritsche gegenüber verriegelbar, wobei jedoch auch eine bezüglich der Ladepritsche beidseitige Anordnung von Schwenkriegeln zweckmäßig sein kann, insbesondere dann, wenn die beiden Schwenkriegel vermittels eines unterhalb der Ladepritschenfläche angeordneten Welle oder dergl. untereinander gekoppelt und daher von einer einzigen Seite der Ladepritsche aus bedienbar sind.

Der bzw. die Schwenkriegel dienen zweckmäßigerweise zugleich auch als Antriebsmittel zur Spannung des Verdeckes in der Weise, daß der bzw. die Schwenkriegel zusammen mit ihrem Einlaufen in ihre Riegelstellung eine nach hinten gerichtete Spannbewegung des beweglichen Endspriegels bzw. Endbügels erzwingen. Im Einzelnen kann hierzu vorgesehen sein, daß in Verbindung mit einer Ausbildung des Schwenkriegels als Hakenriegel und hierbei bei einer Ausbildung der Rückenseite des Schwenkriegels als Steuerkurve eine dem Schwenkriegel zugeordnete Eingriffsausnehmung in einer Bodenplatte des beweglichen Endbügels eine der maximalen Erhebung der Steuerkurve gegenüber geringere Länge aufweist.

Zur Systemaussteifung bei geschlossenem Schiebebügelverdeck ist eine allen Kräften, die insbesondere während der Fahrt das Verdeck zusammenziehen wollen, wie Planenspannung oder Winddruck, gegenläufige Abstützung des beweglichen Endbügels zugeordnet, welche gleichzeitig eine Entlastung der Rollenwagen bei in seiner Endposition befindlichem Endbügel mit sich bringt. In einer bevorzugten Verwirklichungsform einer solchen Systementlastung ist vorgesehen, daß dem beweglichen Endbügel seine verriegelte Endposition sichernde Keilrampen zugeordnet sind, welche derart geneigt sind, daß sie beim Entriegeln des beweglichen Endbügels eine Ablauframpe zur Erzielung eine Anfangsbeschleunigung beim Öffnen des Verdeckes bilden. Im übrigen ist vorzugsweise vorgesehen, daß der bewegliche Endbügel über zwei Rollenwagen an den an den Längsseiten der Ladepritsche angeordneten und zugleich tragende Elemente des Ladepritschenrahmens bildenden Lauf- und Führungsschienen abgestützt ist.

In zweckmäßiger Vervollständigung eines Schiebebügelverdecks ist eine bewährte Antriebseinrichtung für den beweglichen Endbügel vorgesehen, welche sich in einer einfachen Ausführungsform dadurch kennzeichnen kann, daß dem beweglichen Endbügel eine vorzugsweise manuell bedienbare Antriebseinrichtung zugeordnet ist, welche ein mittels einer Kurbel antreibbares Antriebsritzel und eine an wenigstens einer der Laufund Führungsschienen angeordnete Zahnstange umfaßt.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand eines bevorzugten Ausführungsbeispiels näher erläutert.

Fig. 1 zeigt eine perspektivische Ansicht eines bevorzugten Ausführungsbeispiels eines erfindungsgemäßen Schiebebügelverdecks.

Fig. 2 zeigt eine Seitenansicht des Schiebebügelverdecks aus Fig. 1 im geschlossenen Zustand.

Fig. 3 zeigt eine Seitenansicht des Schiebebügelverdecks aus Fig. 1 und 2 im geöffneten Zustand.

Fig. 4 zeigt einen Querschnitt durch das Schiebebügelverdeck der Fig. 1 bis 3.

Fig. 5 zeigt eine ausschnittsweise Ansicht eines Endbügels.

Fig. 6 zeigt eine ausschnittsweise Seitenansicht der Verriegelung eines beweglichen Endbügels.

Fig. 7 zeigt eine Stimansicht eines mehrteiligen Bügels des Schiebebügelverdecks.

Fig. 8 zeigt eine Seitenansicht einer umsetzbaren Schwenklagerung für Hilfsbügel.

Fig. 9 zeigt eine teilweise perspektivische Ansicht der Seitenwandfaltung der Plane.

Fig. 10 zeigt eine ausschnittsweise Ansicht von unten eines Rollenwagens des. Schiebebügelverdecks.

Fig. 11 zeigt eine schematischen Querschnitt durch eine Antriebseinrichtung für einen beweglichen Endbügel des Schiebebügelverdecks.

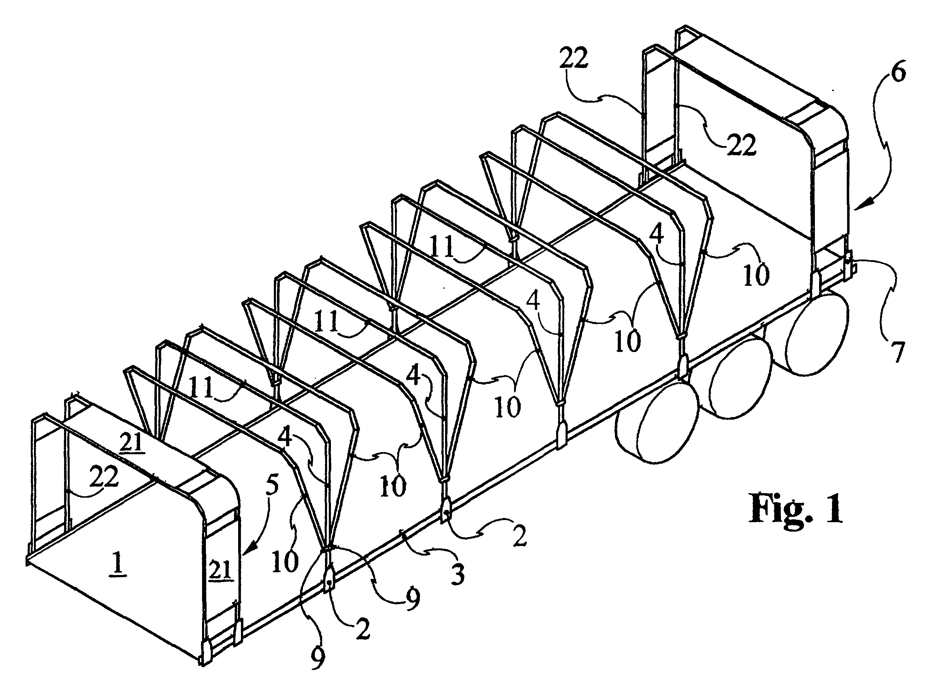

Das in Fig. 1 gezeigte Schiebebügelverdeck für einen Sattelaufleger besteht aus einer Vielzahl von die Breite der Ladepritsche 1 des im einzelnen nicht näher dargestellten Fahrzeugs überspannender und zum Öffnen bzw. Schließen des Verdeckes vermittels Rollenwagen 2 an entlang der beiden Längsseiten der Ladepritsche 1 angeordneten Lauf- und Führungsschienen 3 verschiebbaren U-förmigen Schiebebügeln 4 sowie einem ersten Endbügel 5, der am einen Stirnende der Ladepritsche 1 feststehend angeordnet ist, und einem seinerseits über Rollenwagen 7 verschieblich an den Lauf- und Führungsschienen 3 geführten zweiten Endbügel 6. An der Ladepritsche 1 ist zudem eine Feststell- bzw. Verriegelungseinrichtung 8 angeordnet.

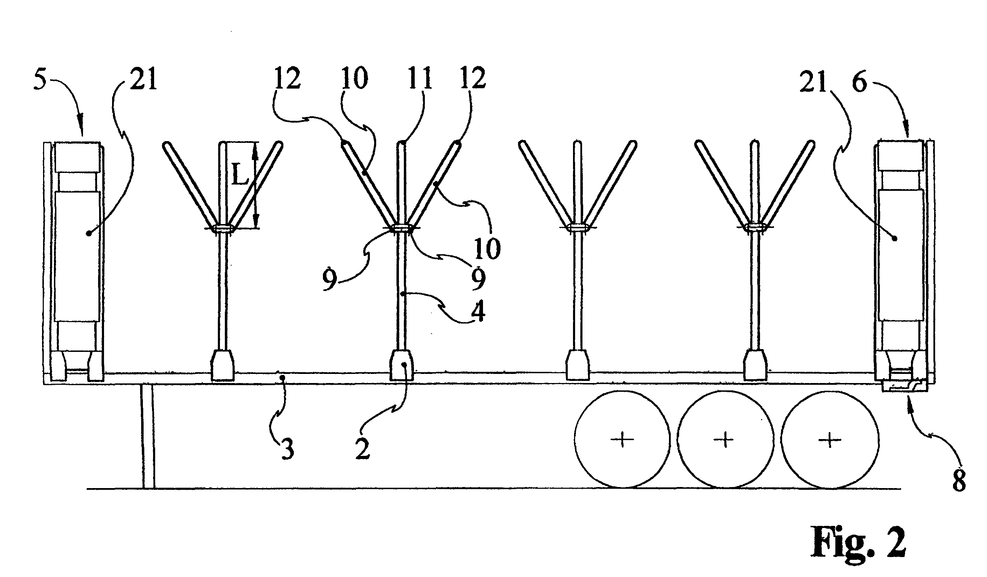

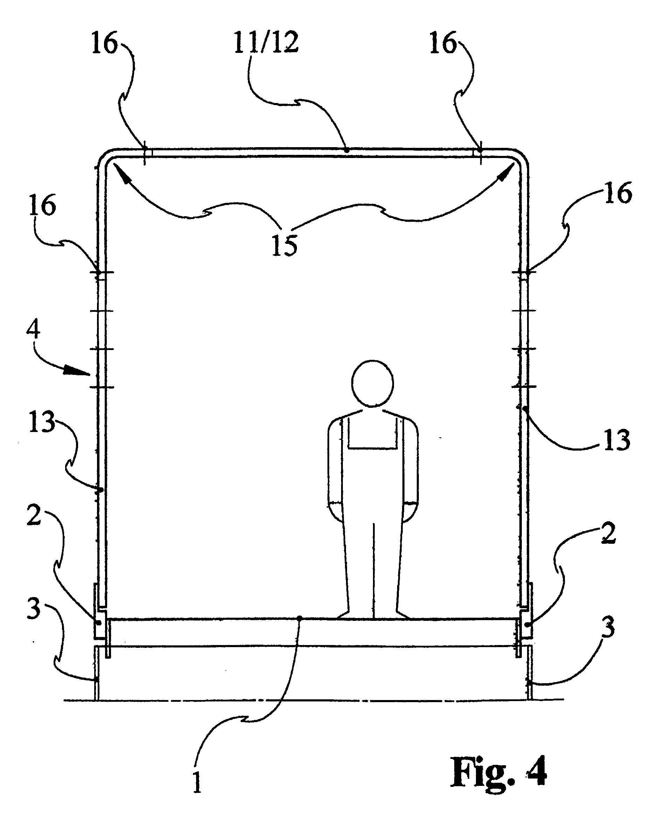

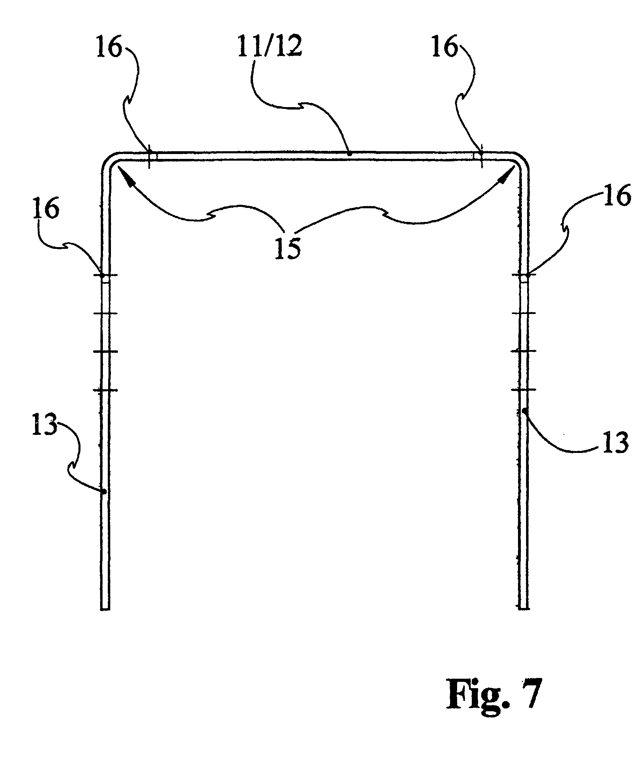

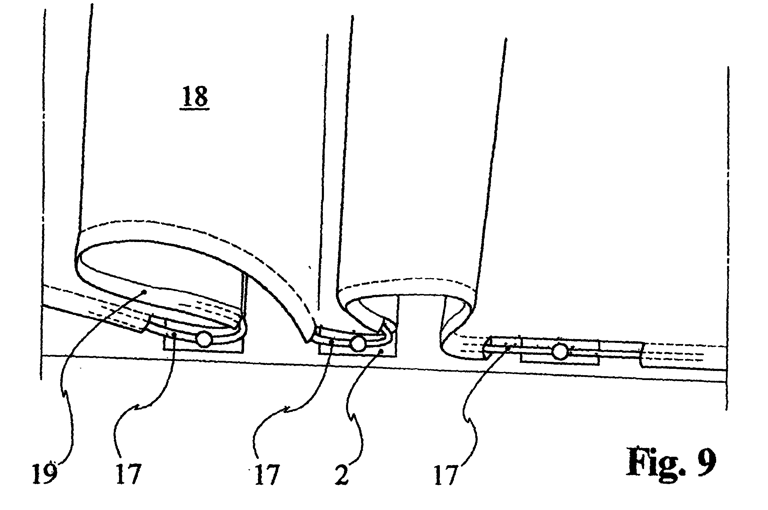

An jeden der Schiebebügel 4 sind um einen begrenzten Winkelbereich und jeweils um eine zur Ebene des Schiebebügels 4 parallele Achse 9 schwenkbar ebenfalls U-förmige Hilfsbügel 10 angeschlossen. Die Schenkellänge der Hilfsbügel 10 ist hierbei größer ist als der Abstand L ihrer Anlenkachse 9 zum Bügelteil 11 des zugehörigen Schiebebügels 4. Aus dieser Schenkellänge der Hilfsbügel 10 im Verhältnis zur Lage des Bügelteils 11 eines zugehörigen Schiebebügels 4 resultiert, daß bei geschlossenem Verdeck die Bügelteile 12 der Hilfsbügel 10 mit den Bügelteilen 11 der Schiebebügel 4 in einer Ebene liegen, wie aus Fig. 1 und 2 ersichtlich, und beim Öffnen des Verdecks, wenn die Hilfsbügel 10 gegen die Schiebebügel 4 beigeklappt werden, die Bügelteile 12 der Hilfsbügel 10 sich in einer den Bügelteilen 11 der Schiebebügel 4 gegenüber angehobenen Lage befinden, woraus zwangsweise eine geordnete Faltung des oberen sowohl an den Bügelteilen 11 der Schiebebügel 4 als mit den Bügelteilen 12 der Hilfsbügel 10 befestigten Bereichs einer im Einzelnen nicht dargestellten Plane resultiert. Wie insbesondere aus Fig. 8 ersichtlich, sind die beiden Hilfsbügel 10 jeweils mittels hinsichtlich ihrer Höhenlage umsetzbar an den Schenkeln 13 der Schiebebügel 4 abgestützter Lager 14 an den beiden Schenkeln jedes Schiebebügels 4 gelagert. Die Schiebebügel 4 und die U-förmigen Hilfsbügel 10 sind jeweils mehrteilig ausgebildet und bestehen jeweils aus drei geraden, die Schenkel 13 und die Bügelteile 11 bzw. 12 bildenden Profilmaterialabschnitten sowie jeweils zwei winkelförmigen Eckteilen 15, wie insbesondere aus Fig. 4 und 7 ersichtlich. Aus Fig. 4 und 7 ist ferner auch zu erkennen, daß die Teile der U-förmigen Bügel 4 bzw. 10 untereinander über lösbare Mittel 16 verbunden sind.

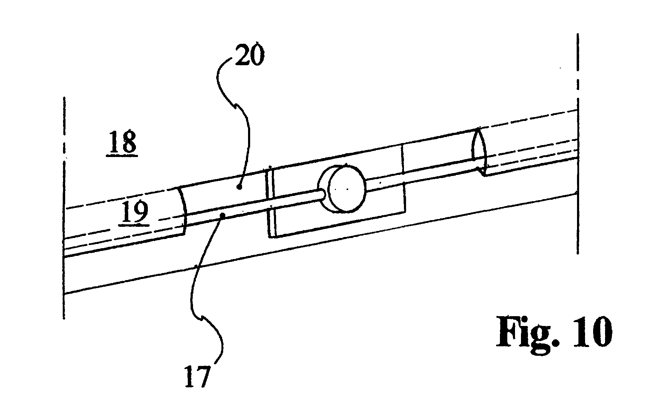

Zur Erzwingung einer gleichfalls geregelten Faltung der Seitenwandbereiche einer Plane 18 sind zwischen den Rollenwagen 2 benachbarter Schiebebügel 4 Drahtseilbügel 17 angeordnet, wie besonders in Fig. 10 dargestellt, und jeweils an der Unterseite des Rollenwagens 2 befestigt. Die Drahtseilabschnitte 17 bilden hierbei halbstarre Elemente und sind hinsichtlich ihrer Länge auf den maximal zugelassenen Abstand zwischen zwei benachbarten Rollenwagen 2 begrenzt. Die in Fig. 9 und 10 teilweise angedeutete Plane 18 ist unterendig jeweils über einen Teil des maximal möglichen Abstandes zwischen zwei benachbarten Rollenwagen 2 hin abschnittsweise mit einem Hohlsaum 19 versehen, welchen die die benachbarten Rollenwagen 2 untereinander verbindenden Drahtseilbügel 17 durchgreifen. Die Plane 18 ist im Bereich der Befestigung der Drahtseilbügel 17 an den Rollenwagenunterseiten jeweils mit einem hohlsaumfreien Längenbereich 20 ausgestattet sind, dessen Länge zur Erzwingung einer bezüglich der Ladepritsche nach außen gerichteten Faltung durch die Drahtseilbügel 17 hinreichend ist

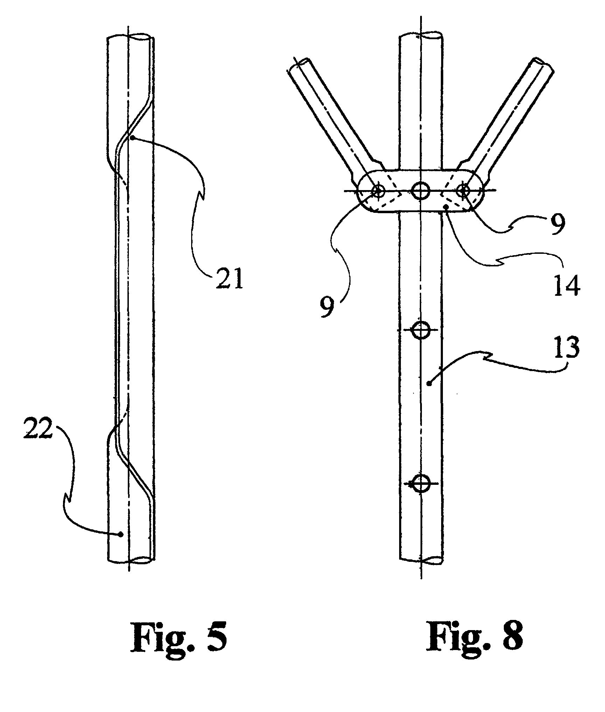

Die beiden Endbügel 5 und 6 des Verdeckes sind jeweils als verwindungssteife Einheit ausgebildet und bestehen jeweils aus zwei untereinander über eine Vielzahl von Abstandsblechen 21 verbundenen U-förmigen Bügeln 22 aus einem Rohrmaterial, wobei, wie insbesondere aus Fig. 5 ersichtlich, die die Rohrmaterialbügel 22 untereinander verbindenden Blechmaterialabschnitte 21 eine trapezförmige Profilquerschnittsform aufweisen und die Profiltiefe der Trapezform geringer ist als der Durchmesser der Rohrmaterialbügel. Die Abstandsbleche sind im übrigen mittels Schweißung mit den Rohrmaterialbügeln 22 verbunden.

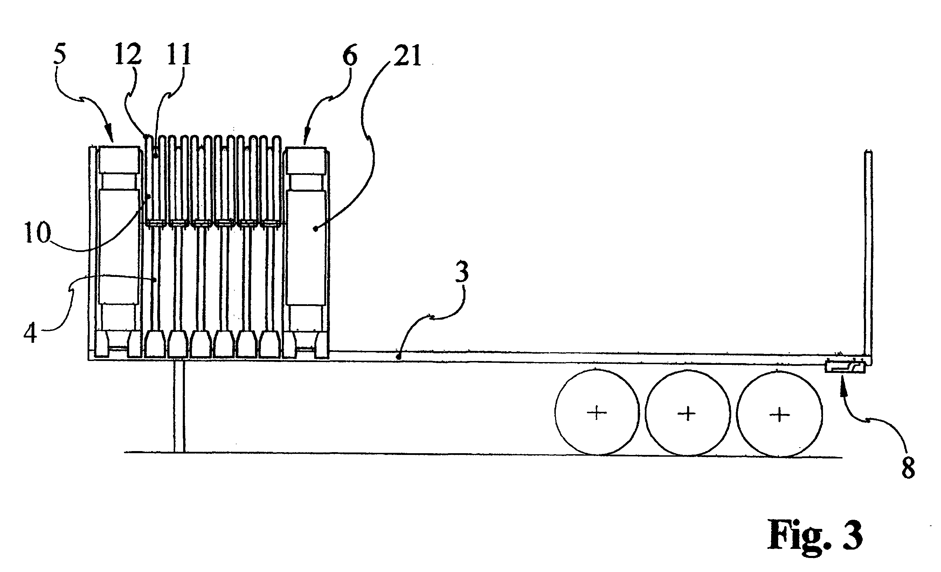

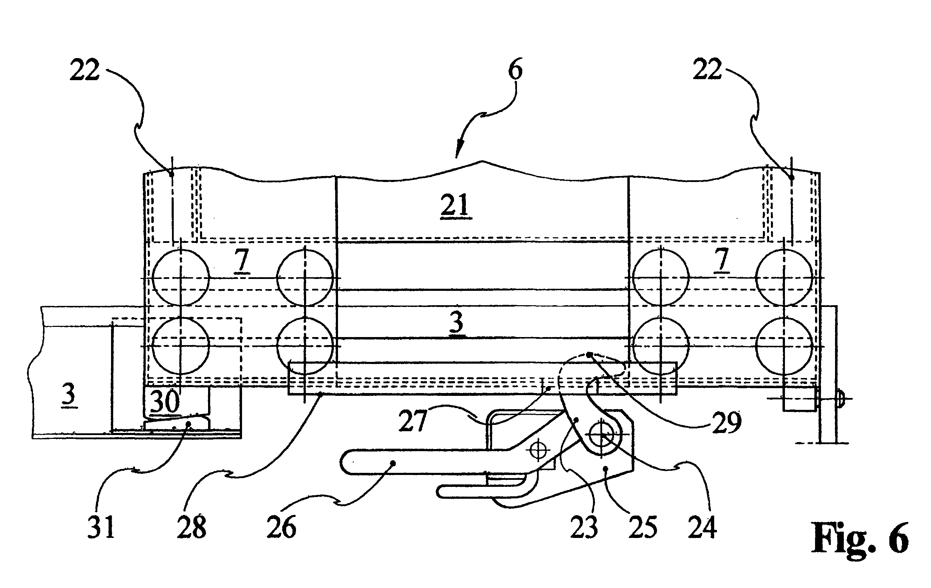

Der bewegliche Endbügel 6 des Schiebebügelverdeckes ist, wie aus Fig. 6, in der die Feststell- bzw. Verriegelungseinrichtung 8 aus Fig. 3 vergrößert dargestellt ist, ersichtlich, vermittels eines als Hakenriegel ausgebildeten Schwenkriegels 23 in seiner dem geschlossenen Verdeck entsprechenden Position der Ladepritsche 1 gegenüber verriegelbar. Der Schwenkriegel 23 ist um eine Achse 24 schwenkbar an einer Traverse 25 des Ladepritschenrahmens angelenkt und mittels eines Handhebels 26 betätigbar. Dem Schwenkriegel ist eine Eingriffsausnehmung 27 in einer Bodenplatte 28 des beweglichen Endbügels 6 zugeordnet.

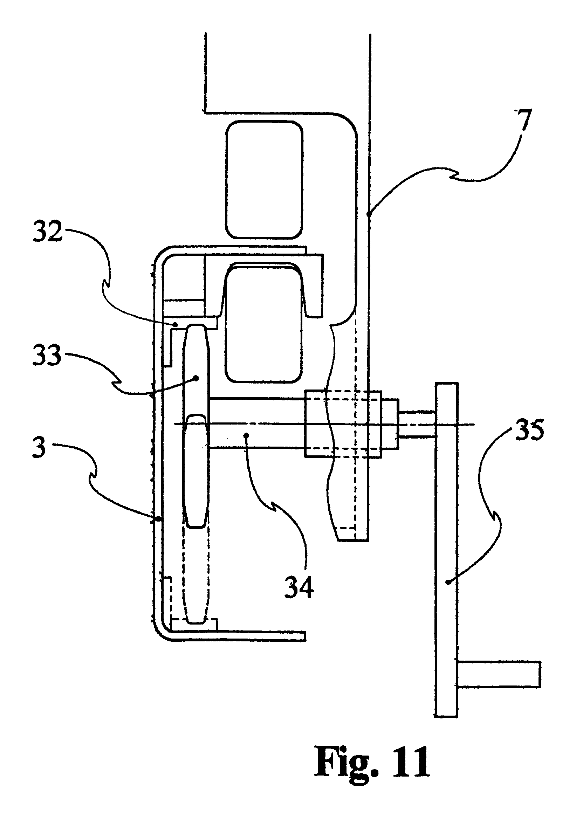

Damit der Schwenkriegel 23 beim Einlaufen in seine Riegelstellung eine nach hinten gerichtete Verschiebe- bzw. Spannbewegung des beweglichen Endbügels 6 erzwingen kann, ist in Verbindung mit einer Ausbildung der Rückenseite 29 des Schwenkriegels 23 als Steuerkurve die Länge der dem Schwenkriegel 23 zugeordneten Eingriffsausnehmung 27 in der Bodenplatte 28 des beweglichen Endbügels 6 geringer als die maximale Erhebung der Steuerkurve 29 derart, daß der Schwenkriegel 23 in Abhängigkeit von seiner Bewegungsrichtung eine vorwärts oder rückwärts gerichtete Bewegung des Endbügels 6 erzwingt. Dem beweglichen Endbügel sind seine verriegelte Endposition sichernde Keilrampen 30, 31 zugeordnet, welche gegensinnig und derart geneigt sind, daß sie beim Entriegeln des beweglichen Endbügels 6 eine Ablauframpe zur Erzielung einer Anfangsbeschleunigung beim Öffnen des Verdecks bilden. Aus Fig. 11 ist im einzelnen ersichtlich, daß der bewegliche Endbügel 6 über zwei Rollenwagen 7 an den Lauf- und Führungsschienen 3 abgestützt ist. Wie dies im besonderen aus Fig. 11 erkennbar ist, ist dem beweglichen Endbügel 6 eine manuell betätigbare Antriebseinrichtung zugeordnet, welche im wesentlichen eine in bzw. an der Lauf- und Führungsschiene 3 innen liegend befestigte Zahnstange 32 und ein mit dieser kämmendes Antriebsritzel 33 umfaßt, wobei das Antriebsritzel 33 auf einer am einen Rollenwagen 7 gelagerten Welle 34 drehsicher befestigt ist und die Welle 34 andererseits drehsicher mit einer Handkurbel 35 gekoppelt ist.

## Patentansprüche

1. Schiebebügelverdeck für Fahrzeuge wie LKW oder Anhänger, umfassend eine Anzahl von die Breite einer Ladepritsche (1) des Fahrzeugs überspannender und zum Öffnen bzw. zum Schließen des Verdecks vermittels Rollen bzw. Rollenwagen (2) an entlang der beiden Längsseiten der Ladepritsche (1) angeordneten Lauf- und Führungsschienen (3) in Längsrichtung der Ladepritsche (1) verschiebbarer U-förmiger Schiebebügel (4), die eine bei geschlossenem Verdeck die Ladepritsche (1) bzw. den Laderaum des Fahrzeugs überdeckende Plane (18) auf ihre eine obere Begrenzung definierenden Bügelteilen (11) tragen, wobei ein erster Endbügel (5) am einen Stirnende der Ladepritsche (1) feststehend angeordnet ist und ein zweiter, beweglicher Endbügel (6) zumindest einer am anderen Ende der Ladepritsche (1) angeordneten Feststell- bzw. Verriegelungseinrichtung (8) zugeordnet ist,
**dadurch gekennzeichnet,**
**daß** an dem Schiebebügel (4) wenigstens ein U-förmiger Hilfsbügel (10) angeordnet ist, der um einen begrenzten Winkelbereich um eine zur Ebene des Schlebebügels (4) parallele Anlenkachse (9) schwenkbar ist, und
**daß** die Schenkellänge des Hilfsbügels (10) größer ist als der Abstand (L) der Anlenkachse (9) zum Bügelteil (11) des zugehörigen Schiebebügels (4).

2. Schiebebügelverdeck nach Anspruch 1, **dadurch gekennzeichnet, daß** jeder Schiebebügel (4) beidseitig mit je einem Hilfsbügel (10) ausgestattet ist.

3. Schiebebügelverdeck nach Anspruch 1 oder 2, **dadurch gekennzeichnet, daß** der wenigstens eine Hilfsbügel (10) mit der Plane (18) verbunden ist.

4. Schiebebügelverdeck nach einem der Ansprüche 1 bis 3, **dadurch gekennzeichnet, daß** die Plane (18) eine Einrichtung (17) zur Erzwingung einer Faltung beim Öffnen des Verdecks aufweist.

5. Schiebebügelverdeck nach einem der Ansprüche 1 bis 4, **dadurch gekennzeichnet, daß** die Plane (18) an ihren beiden unteren Längsrändern über halbsteife Elemente (17) mit den Schiebebügeln (4) bzw. den diese tragenden Rollenwagen (2) verbunden ist.

6. Schiebebügelverdeck nach einem der Ansprüche 1 bis 5, **dadurch gekennzeichnet, daß** einander benachbarte Schiebebügel (4) vermittels an den ihnen zugeordneten Rollenwagen (2) befestigter Drahtseilbügel (17) untereinander verbunden sind, daß die Plane (18) unterendig jeweils über einen Teil des maximal möglichen Abstandes zwischen zwei benachbarten Schiebebügeln (4) hin mit einem Hohlsaum (19) versehen ist, und daß die die benachbarten Schiebebügel (4) untereinander verbindenden Drahtseilbügel (17) die im Bereich der unteren Längsränder der Plane (18) ausgebildeten Hohlsaumabschnitte durchgreifen.

7. Schiebebügelverdeck nach Anspruch 6, **dadurch gekennzeichnet, daß** die Plane (18) im Bereich der Befestigung der Drahtseilbügel (17) an den Rollenwagen (2) bzw. Schiebebügeln (4) jeweils mit einem hohlsaumfreien Längenbereich (20) ausgestattet ist, dessen Länge zur Erzwingung einer bezüglich der Ladepritsche (1) nach außen gerichteten Faltung hinreichend ist, und daß den Drahtseilbügeln (17) ferner Abweiselemente zur Erzwingung einer bogenförmigen Auslenkung zugeordnet sind.

8. Schiebebügelverdeck nach einem der Ansprüche 1 bis 7, **dadurch gekennzeichnet, daß** die beiden Endbügel (5; 6) des Verdecks jeweils aus zwei untereinander über eine Vielzahl von Abstandsblechen (21) verbundenen U-förmigen Bügeln (22) aus einem Rohrmaterial bestehen, wobei die die Rohrmaterialbügel (22) untereinander verbindenden Blechmaterialabschnitte (21) eine trapezförmige Profilquerschnittsforrn aufweisen, deren Profiltiefe höchstens gleich groß, vorzugsweise geringer ist als der Durchmesser der Rohrmaterialbügel (22) und wobei die Abstandsbleche (21) ferner mittels Schweißung mit den Rohrmaterialbügeln (22) verbunden sind.

9. Schiebebügelverdeck nach einem der Ansprüche 1 bis 8, **dadurch gekennzeichnet, daß** der bewegliche Endbügel (6) vermittels wenigstens eines Schwenkriegels (23) in seiner dem geschlossenen Verdeck entsprechenden Position der Ladepritsche (1) gegenüber verriegelbar ist.

10. Schiebebügelverdeck nach Anspruch 9, **dadurch gekennzeichnet, daß** in Verbindung mit einer Ausbildung des Schwenkriegels als Hakenriegel (23) und hierbei bei einer Ausbildung der Rückenseite des Schwenkriegels (23) als Steuerkurve (29) eine dem Schwenkriegel (23) zugeordnete Eingriffsausnehmung (27) in einer Bodenplatte (28) des beweglichen Endbügels (6) eine der maximalen Erhebung der Steuerkurve (29) gegenüber geringere Länge aufweist.

11. Schiebebügelverdeck nach einem der Ansprüche 1 bis 10, **dadurch gekennzeichnet, daß** dem beweglichen Endbügel (6) seine verriegelte Endposition sichernde Keilrampen (30, 31) zugeordnet sind, welche derart geneigt sind, daß sie beim Entriegeln des beweglichen Endbügels (6) eine Ablauframpe zur Erzielung eine Anfangsbeschleunigung beim Öffnen des Verdecks bilden.

12. Schiebebügelverdeck nach einem der Ansprüche 1 bis 11, **dadurch gekennzeichnet, daß** der bewegliche Endbügel (6) über zwei Rollenwagen (7) an den an den Längsseiten der Ladepritsche (1) angeordneten und zugleich tragende Elemente des Ladepritschenrahmens bildenden Lauf- und Führungsschienen (3) abgestützt ist.

13. Schiebebügelverdeck nach einem der Ansprüche 1 bis 12, **dadurch gekennzeichnet, daß** die U-förmigen Schiebebügel (4) und die U-förmigen Hilfsbügel (10) jeweils mehrteilig ausgebildet sind und jeweils wenigstens drei gerade (13) und zwei winkelförmige (14) Profilmaterialzuschnitte umfassen.

14. Schiebebügelverdeck nach Anspruch 6 oder 7, **dadurch gekennzeichnet, daß** die Drahtseilbügel (17) jeweils an deren Unterseite an den Rollenwagen (2, 7) befestigt sind.

15. Schiebebügelverdeck nach einem der Ansprüche 1 bis 14, **dadurch gekennzeichnet, daß** dem beweglichen Endbügel (6) eine vorzugsweise manuell bedienbare Antriebseinrichtung (32-35) zugeordnet ist, welche ein mittels einer Kurbel (35) antreibbares Antriebsritzel (33) und eine an wenigstens einer der Lauf- und Führungsschienen (3) angeordnete Zahnstange (32) umfaßt.

16. Schiebebügelverdeck nach einem der Ansprüche 1 bis 15, **dadurch gekennzeichnet, daß** der wenigstens eine Hilfsbügel (10) mittels eines umsetzbaren Lagers (14) höhenverstellbar an Schenkeln (13) des Schiebebügels (4) gelagert ist.

17. Schiebebügelverdeck nach einem der Ansprüche 1 bis 16, **dadurch gekennzeichnet, daß** bei geschlossenem Verdeck ein Bügelteil (12) des Hilfsbügels (10) und das Bügelteil (11) des Schiebebügels (4) in einer Ebene liegen.

## Claims

1. Sliding-bow folding top for vehicles, such as lorries or trailers, comprising a number of U-shaped sliding bows (4) which span the width of a loading platform (1) of the vehicle and, for the opening and the closing of the folding top, can be displaced in the longitudinal direction of the loading platform (1) by means of rollers or roller carriages (2) on running and guide rails (3) arranged along the two longitudinal sides of the loading platform (1), the said sliding bows carrying, on their bow parts (11) which define an upper boundary, a tarpaulin (18) which, when the folding top is closed, covers the loading platform (1) or the loading compartment of the vehicle, wherein a first end bow (5) is arranged in a fixed manner on the one end of the loading platform (1) and a second, movable end bow (6) is assigned at least to one securing or locking device (8) arranged at the other end of the loading platform (1),
**characterized in**
**that** at least one U-shaped auxiliary bow (10) is arranged on the sliding bow (4), which auxiliary bow can be pivoted through a limited angular range about an axis of articulation (9) parallel to the plane of the sliding bow (4), and
**that** the limb length of the auxiliary bow (10) is greater than the distance (L) of the axis of articulation (9) from the bow part (11) of the associated sliding bow (4).

2. Sliding-bow folding top according to claim 1, **characterized in that** each sliding bow (4) is provided on both sides with a respective auxiliary bow (10).

3. Sliding-bow folding top according to claim 1 or 2, **characterized in that** said at least one auxiliary bow (10) is connected to the tarpaulin (18).

4. Sliding-bow folding top according to one of claims 1 to 3, **characterized in that** the tarpaulin (18) has a device (17) for enforcing folding during opening of the folding top.

5. Sliding-bow folding top according to one of claims 1 to 4, **characterized in that** the tarpaulin (18) is connected at its two lower longitudinal edges via semi-rigid elements (17) to the sliding bows (4) or to the roller carriages (2) carrying the latter.

6. Sliding-bow folding top according to one of claims 1 to 5, **characterized in that** mutually adjacent sliding bows (4) are connected to one another by means of wire-rope bows (17) fixed to the roller carriages (2) assigned to the sliding bows, **in that** the tarpaulin (18) is provided at the lower end, in each case over part of the maximum possible distance between two adjacent sliding bows (4), with a hollow hem (19), and that the wire-rope bows (17), which connect the adjacent sliding bows (4) to one another, reach through the hollow-hem sections formed in the region of the lower longitudinal edges of the tarpaulin (18).

7. Sliding-bow folding top according to claim 6, **characterized in that**, in the region of the fastening of the wire-rope bows (17) to the roller carriages (2) or sliding bows (4), the tarpaulin (18) is provided in each case with a length region (20) which is free of the hollow hem and whose length is sufficient in order to enforce folding which is directed outwards with respect to the loading platform (1), and that the wire-rope bows (17) are furthermore assigned deflecting elements in order to enforce a curved deflection.

8. Sliding-bow folding top according to one of claims 1 to 7, **characterized in that** the two end bows (5; 6) of the folding top each comprise two U-shaped bows (22) which are made of tubular material and are connected to one another via a multiplicity of spacer plates (21), wherein the sheet-metal material sections (21) connecting the tubular-material bows (22) to one another having a trapezoidal profile cross-sectional shape whose profile depth is at most the same size as, preferably smaller than, the diameter of the tubular-material bows (22), and wherein the spacer plates (21) furthermore are connected to the tubular-material bows (22) by means of welding.

9. Sliding-bow folding top according to one of claims 1 to 8, **characterized in that** the movable end bow (6) can be locked in its position relative to the loading platform (1), which position corresponds to the closed folding top, by means of at least one pivoting bar (23).

10. Sliding-bow folding top according to claim 9, **characterized in that**, in conjunction with the pivoting bar being formed as a hook-type bar (23) and, in this connection, with the rear side of the pivoting bar (23) being formed as a radial cam (29), an engaging recess (27), which is assigned to the pivoting bar (23), in a floor plate (28) of the movable end bow (6) has a shorter length than the maximum elevation of the radial cam (29).

11. Sliding-bow folding top according to one of claims 1 to 10, **characterized in that** the movable end bow (6) is assigned wedge-type ramps (30, 31) which secure its locked end position and are inclined in such a manner that during unlocking of the movable end bow (6) they form a run-off ramp in order to obtain an initial acceleration during opening of the folding top.

12. Sliding-bow folding top according to one of claims 1 to 11, **characterized in that** the movable end bow (6) is supported via two roller carriages (7) on the running and guide rails (3) which are arranged on the longitudinal sides of the loading platform (1) and at the same time form load-bearing elements of the loading-platform frame.

13. Sliding-bow folding top according to one of claims 1 to 12, **characterized in that** the U-shaped sliding bows (4) and the U-shaped auxiliary bows (10) are in each case of multipart design and in each case comprise at least three straight (13) and two angular (14) profiled material blanks.

14. Sliding-bow folding top according to claim 6 or 7, **characterized in that** the wire-rope bows (17) are in each case fastened at their lower side to the roller carriages (2, 7).

15. Sliding-bow folding top according to one of claims 1 to 14, **characterized in that** the movable end bow (6) is assigned a preferably manually operable driving device (32-35) which comprises a driving pinion (33), which can be driven by means of a crank (35), and a rack (32) arranged on at least one of the running and guide rails (3).

16. Sliding-bow folding top according to one of claims 1 to 15, **characterized in that** the at least one auxiliary bow (10) is mounted in a height-adjustable manner on limbs (13) of the sliding bow (4) by means of a movable bearing (14).

17. Sliding-bow folding top according to one of claims 1 to 16, **characterized in that** a bow part (12) of the auxiliary bow (10) and the bow part (11) of the sliding bow (4) lie in one plane when the folding top is closed.

## Revendications

1. Bâche à arceaux coulissants pour véhicules tels que des camions ou des remorques, comprenant une pluralité d'arceaux coulissants (4) en forme de grand U, couvrant la largeur d'une plate-forme de chargement (1) du véhicule et déplaçables dans la direction longitudinale de la plate-forme de chargement (1), pour ouvrir ou fermer la bâche, au moyen de galets ou de chariots à galets (2), sur des rails de défilement et de guidage (3) disposés le long des côtés longitudinaux déplaçables, arceaux coulissants (4) qui, lorsque la bâche ou que le prélart (18) couvrant l'espace de chargement du véhicule est fermé, portent des parties d'arceaux (11) définissant une délimitation supérieure, un premier arceau d'extrémité (5) étant disposé stationnaire sur une extrémité frontale de la plate-forme de chargement (1) et un deuxième arceau d'extrémité (6), mobile, étant associé au moins à un dispositif de blocage ou de verrouillage (8) disposé sur l'autre extrémité de la plate-forme de chargement (1),
**caractérisée en ce que**
sur l'arceau coulissant (4) est disposé au moins un arceau auxiliaire (10) en forme de grand U qui est susceptible de pivoter d'une plage angulaire limitée autour d'un axe d'articulation (9) parallèle au plan de l'arceau coulissant (4), et
**en ce que** la longueur de branche de l'étrier de l'arceau auxiliaire (10) est supérieure à l'espacement (L) entre l'axe d'articulation (9) et la partie d'arceau (11) de l'arceau coulissant (4) associé.

2. Bâche à arceaux coulissants selon la revendication 1, **caractérisée en ce que** chaque arceau coulissant (4) est muni sur chacun des deux côtés d'un arceau auxiliaire (10).

3. Bâche à arceaux coulissants selon la revendication 1 ou 2, **caractérisée en ce que** le au moins un arceau auxiliaire (10) est relié au prélart (18).

4. Bâche à arceaux coulissants selon l'une des revendications 1 à 3 **caractérisée en ce que** le prélart (18) présente un dispositif (17) pour forcer la bâche au pliage lors de son ouverture.

5. Bâche à arceaux coulissants selon l'une des revendications 1 à 4 **caractérisée en ce que**, à ses deux bords longitudinaux inférieurs, le prélart (18) est relié, par l'intermédiaire d'éléments (17) semi-ridiges, aux arceaux coulissants (4) ou au chariot à galets (2) les portant.

6. Bâche à arceaux coulissants selon l'une des revendications 1 à 5, **caractérisée en ce que** des arceaux coulissants (4) voisins les uns des autres sont reliés ensemble à l'aide d'arceaux en câble (17) fixés sur les chariots à galets (2) leur étant associés, **en ce que** le prélart (18) est muni, à l'extrémité inférieure, chaque fois sur une partie de l'espacement maximal possible entre deux étriers coulissants (4) voisine, d'un ourlet creux (19), et **en ce que** les arceaux en câble (17), reliant entre eux les arceaux coulissants (4) voisins, traversent les tronçons d'ourlets creux réalisés dans la zone des bords longitudinaux inférieurs du prélart (18).

7. Bâche à arceaux coulissants selon la revendication 6, **caractérisée en ce que**, dans la zone de la fixation des arceaux en câble (17) sur les chariots à galets (2) ou les arceaux coulissants (4), le prélart (18) est muni chaque fois d'une zone de longueur (20) exempte d'ourlet creux, dont la longueur est suffisante pour contraindre à un pliage orienté vers l'extérieur par rapport à la plate-forme de chargement (1), et **en ce qu'**aux arceaux en câble (17) sont en outre associés des éléments écarteurs, pour contraindre à un développement en forme d'arc.

8. Bâche à arceaux coulissants selon l'une des revendications 1 à 7, **caractérisée en ce que** les deux arceaux d'extrémité (5; 6) de la bâche sont chacun constitués de deux arceaux (22) en forme de U, reliés ensemble par l'intermédiaire d'une pluralité de tôles d'espacements (21) et formés d'un matériau tubulaire, les découpes de matériau en tôle (21), reliant entre eux les arceaux en matériau tubulaire (22), présentant une forme de section transversale de profil trapézoïdal, dont la profondeur de profil est au plus égale à, de préférence inférieur au, diamètre des arceaux de matériau tubulaire (22), et les tôles d'espacement (21) étant en outre reliées aux arceaux de matériau tubulaire (22) par soudage.

9. Bâche à arceaux coulissants selon l'une des revendications 1 à 8, **caractérisée en ce que** l'arceau d'extrémité (6) mobile est verrouillable, à l'aide d'au moins un arceau pivotant (23), lorsqu'il se trouve à sa position correspondant à la bâche fermée par rapport à la plate-forme de chargement (1).

10. Bâche à arceaux coulissants selon la revendication 9, **caractérisée en ce que**, en liaison avec une réalisation de l'arceau pivotant sous forme de verrou à crochet (23) et en même temps en cas de réalisation de la face arrière du verrou pivotant (22) sous la forme d'une came de commande (29), un évidement d'engagement (27), associé au verrou pivotant (23), ménagé dans une plaque de fond (28) de l'arceau d'extrémité (6) mobile, présente une longueur inférieure à la valeur de soulèvement maximal de la came de commande (29).

11. Bâche à arceaux coulissants selon l'une des revendications 1 à 10, **caractérisée en ce qu'**à l'étrier d'extrémité (6) mobile sont associées des rampes cunéiformes (30, 31) assurant sa position finale verrouillée, les rampes étant inclinées de manière que, lors du déverrouillage de l'arceau d'extrémité (6) mobile, elles forment une rampe de franchissement pour obtenir une accélération initiale lors de l'ouverture de la bâche.

12. Bâche à arceaux coulissants selon l'une des revendications 1 à 11, **caractérisée en ce que** l'arceau d'extrémité (6) mobile est soutenu, par deux chariots à galets (7), sur les rails de défilement et de guidage (7) disposés sur les côtés longitudinaux de la plate-forme de chargement (1) et formant en même temps les éléments porteurs du cadre de plate-forme de chargement.

13. Bâche à arceaux coulissants selon l'une des revendications 1 à 12, **caractérisée en ce que** les étriers coulissants (4) en forme de grand U et les étriers auxiliaires (10) en forme de grand U sont chacun réalisés en plusieurs parties et comprennent chacun au moins trois découpes de matériau profilé rectiligne (13) et deux découpes de matériau profilé coudé (14).

14. Bâche à arceaux coulissants selon la revendication 6 ou 7, **caractérisée en ce que** les arceaux en câble (17) sont chacun fixés, sur leur face inférieure, sur les chariots à galets (2, 7).

15. Bâche à arceaux coulissants selon l'une des revendications 1 à 14, **caractérisée en ce qu'**à l'arceau d'extrémité (6) mobile est associé un dispositif d'entraînement (32-35), de préférence pouvant être manoeuvré manuellement, qui comprend un pignon d'entraînement (33), pouvant être entraîné à l'aide d'une manivelle (35), et une crémaillère (32) disposée sur au moins l'un des rails de défilement et de guidage (3).

16. Bâche à arceaux coulissants selon l'une des revendications 1 à 15, **caractérisée en ce que** le au moins un étrier auxiliaire (10) est monté à l'aide d'un palier (14) repositionnable, de façon réglable en hauteur, sur des branches (13) de l'arceau coulissant (4).

17. Bâche à arceaux coulissants selon l'une des revendications 1 à 16, **caractérisée en ce que**, lorsque la bâche est fermée, une partie d'arceau (12) de l'arceau auxiliaire (10) et la partie d'arceau (11) de l'arceau coulissant (4) sont situées dans un même plan.
